# EUROPÄISCHE PATENTSCHRIFT

(11) **EP 0 579 913 B1**
(45) Veröffentlichungstag und Bekanntmachung des Hinweises auf die Patenterteilung: **25.01.1995**
(21) Anmeldenummer: 93107446.2
(22) Anmeldetag: 07.05.1993
(51) Int. Cl.: B60K 17/28, B60K 25/06

(54) **Vorrichtung zum Kuppeln eines Nebenaggregats mit einem Hubkolbenmotor**
Device for coupling an auxilliary unit to a reciprocating-piston engine
Dispositif pour l'embrayage d'un agrégat auxiliaire avec un moteur à pistons

(30) Priorität: 23.07.1992 DE 4224287
(43) Veröffentlichungstag der Anmeldung: 26.01.1994
(73) Patentinhaber: Dr.Ing.h.c. F. Porsche Aktiengesellschaft, 70435 Stuttgart (DE)
(72) Erfinder: Wacker, Bernd, W-7251Weissach (DE)

(56) Entgegenhaltungen:
- GB-A- 2 142 101
- GB-A- 2 168 015
- US-A- 3 041 884

## Beschreibung

Die Erfindung betrifft eine Vorrichtung zum Kuppeln eines Nebenaggregats mit einem Hubkolbenmotor gemäß dem Oberbegriff des Anspruchs 1.

Eine derartige Kuppelvorrichtung ist aus US-PS 3 041 884 bekannt. Zum Kuppeln des Hebenaggregats eines Traktors dient eine Lamellenkupplung aus Innenlamellen und Außenlamellen, die hydraulisch betätigbar ist. Eine solche Kupplung erfordert einen großen Bauraum und ist in der Herstellung teuer.

Es ist die Aufgabe der Erfindung, eine Kuppelvorrichtung für ein Nebenaggregat zu schaffen, die preisgünstig herstellbar ist und einen kleinen Bauraum benötigt.

Zur Lösung dieser Aufgabe dienen die kennzeichnenden Merkmale des Anspruchs 1. Da zum Kuppeln eine Synchronisiereinrichtung verwendet wird, ist der benötigte Bauraum sehr gering. Die Synchronisierkupplung kann über eine Schaltstange manuell betätigt werden, so daß keine zusätzlichen Kosten für eine hydraulische Betätigung und Ansteuerung anfallen. Wenn in vorteilhafter Ausgestaltung der Erfindung nach Anspruch 2 eine hälftige, handelsübliche Synchronisierkupplung benutzt wird, wie sie in synchronisierten Gangschaltgetrieben von Kraftfahrzeugen zum Schalten der Getriebegänge verwendet wird, ist wegen der Massenfertigung auch der Preis für eine solche Kupplung recht nieder.

Weitere, die Erfindung ausgestaltende Merkmale enthalten die Ansprüche 3 bis 6.

Ein Ausführungsbeispiel der Erfindung ist in der Zeichnung dargestellt und wird nachfolgend erläutert.

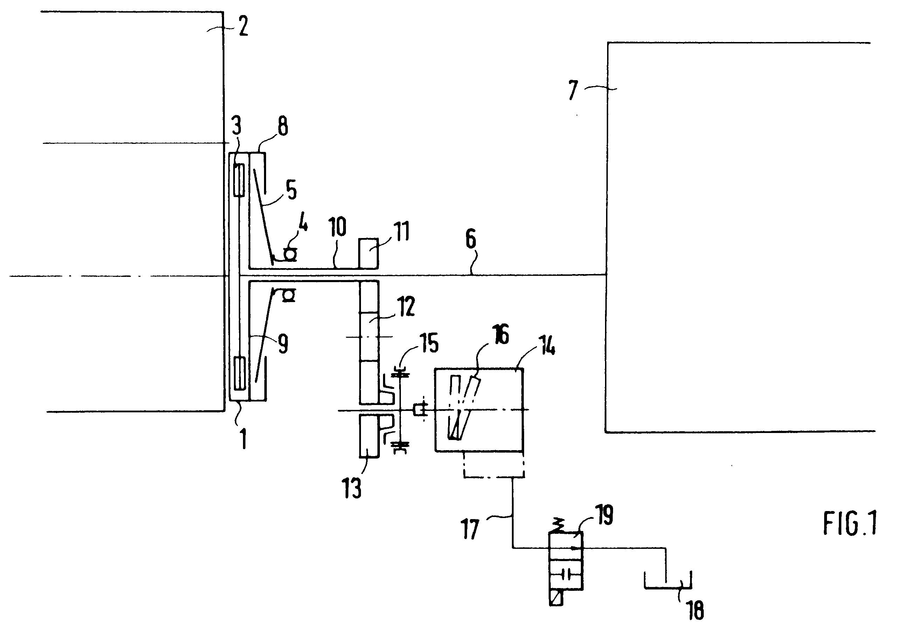

Es zeigen
- Figur 1: Antrieb und Kupplung eines Nebenaggregats eines Hubkolbenmotors in schematischer Darstellung

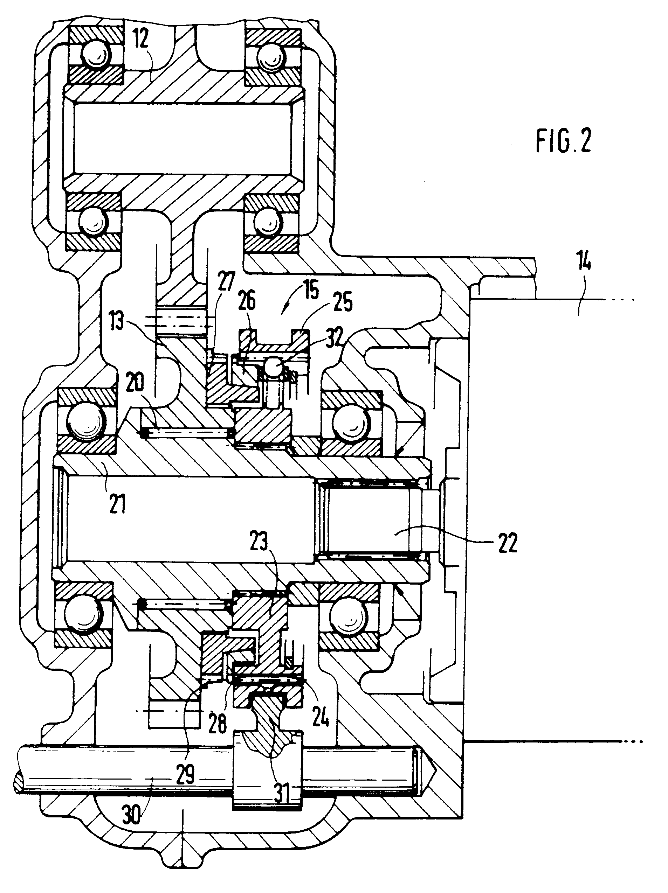

- Figur 2: Längsschnitt durch die Kupplung des Nebenaggregats
Mit dem Schwungrad 1 eines Hubkolbenmotors 2 ist eine Kupplungsscheibe 3 mittels einer sich an einem Einrücklager 4 abstützenden Tellerfeder 5 reibschlüssig verbindbar. Von der Kupplungsscheibe 3 führt eine Zentralwelle 6 zu einem Gangschaltgetriebe 7. Eine am Kupplungsgehäuse 8 befestigte Mitnehmerscheibe 9 treibt eine zur Zentralwelle 6 konzentrische Hohlwelle 10. Ein endseitig an ihr befestigtes Zahnrad 11 steht über ein Zwischenrad 12 mit einem Antriebsrad 13 einer Hydropumpe 14 in Eingriff. Die Hydropumpe 14 wird zugeschaltet, sobald eine zwischen ihr und dem Antriebsrad 13 angeordnete Synchronisierkupplung 15 geschlossen ist.
Die Fördermenge der Hydropumpe 14 ist mit einem Verstellorgan 16 steuerbar. Von der Hydropumpe führt eine Rücklaufleitung 17 zu einem Vorratsbehälter 18, die durch ein Ventil 19 verschließbar ist.

Das Antriebsrad 13 ist mit einem Nadellager 20 auf einer hohl gebohrten Antriebswelle 21 gelagert, in der zentrisch eine Eingangswelle 22 der Hydropumpe befestigt ist. Auf der Antriebswelle ist eine Führungsmuffe 23 fest angebracht; auf ihrer Außenverzahnung 24 ist eine Schaltmuffe 25 drehfest und längsverschieblich.

Durch Längsverschieben der Schaltmuffe 25 auf der Führungsmuffe 23 wird zunächst ein Innenkonus eines an ihm befestigten Synchronringes 26 mit einem Konus eines am Antriebsrad 13 befestigten, zweiten Synchronringes 27 in reibschlüssige Verbindung gebracht. Beim weiteren Vorrücken der Schaltmuffe 25 können über sie die Außenverzahnungen 28 und 29 der beiden Synchronisierkupplungen 26 und 27 in formschlüssige Verbindung gebracht werden. Zum Längsverschieben der Schaltmuffe 25 dient eine manuell betätigte Schaltstange 30, deren Schaltgabel 31 in eine Ringnut der Schaltmuffe 25 eingreift. Zur Rastierung der Schaltmuffe 25 dient eine Kugel raste 32.

Da die Hydropumpe 14 eine hohe Leistungsaufnahme hat, sind Vorkehrungen getroffen, daß die Synchronisierkupplung 15 beim Zuschalten der Hydropumpe 14 nicht überlastet wird. Sie wird nur dann zugeschaltet, wenn der Hubkolbenmotor im Leerlauf mit niederer Drehzahl läuft. Zusätzlich ist ein Verstellorgan 16 für die Fördermenge der Hydropumpe 14 so eingestellt, daß sie nur einen minimalen Förderstrom liefert. Weiterhin wird das Ventil 19, das in die Rücklaufleitung 17 zum Vorratsbehälter 18 eingebaut ist, selbsttätig geöffnet, so daß die Hydropumpe 14 unmittelbar drucklos in den Vorratsbehälter 18 fördert, aus dem sie auch ansaugt.

## Patentansprüche

1. Vorrichtung zum Kuppeln eines von der Kurbelwelle eines Hubkolbenmotors getriebenen Antriebrades mit einer Antriebswelle eines Nebenaggregats, dadurch gekennzeichnet, daß das Antriebsrad (13) der Antriebswelle (21) drehbar gelagert ist und mit ihr mittels einer Synchronisierkupplung (15) drehfest verbindbar ist, wobei die Synchronisierkupplung (15) aus einer zur Antriebswelle (21) drehfesten Führungsmuffe (23), einer zu ihr drehfesten und axialverschieblichen Schaltmuffe (25) und zwei Synchronringen (26, 27) besteht, von denen der eine Ring (27) an dem Antriebsrad, der andere Ring (26) an der Schaltmuffe (25) befestigt ist und wobei durch Längsverschieben der Schaltmuffe (25) die Synchronisierringe (26, 27) zunächst reibschlüssig und danach formschlüssig miteinander verbindbar sind.

2. Vorrichtung nach Anspruch 1, dadurch gekennzeichnet, daß als Synchronisierkupplung (15) die eine Hälfte einer handelsüblichen Synchronisierkupplung dient, wie sie zum Schalten der Getriebegänge in synchronisierten Gangschaltgetrieben verwendet wird.

3. Vorrichtung nach Anspruch 1, dadurch gekennzeichnet, daß der Hubkolbenmotor (2) beim Einrücken der Synchronisierkupplung (15) auf Leerlauf gestellt ist.

4. Vorrichtung nach Anspruch 1, wobei das Nebenaggregat eine Hydropumpe (14) mit verstellbarer Förderleistung ist, dadurch gekennzeichnet, daß die Förderleistung der Hydropumpe (14) vor Einrücken der Synchronisierkupplung (15) vermindert wird.

5. Vorrichtung nach Anspruch 4, dadurch gekennzeichnet, daß die Hydropumpe (14) durch Öffnen eines Ventils (19) drucklos in einen Vorratsbehälter (18) fördert, aus dem sie auch ansaugt.

6. Vorrichtung nach Anspruch 1 und 4, dadurch gekennzeichnet, daß die Antriebswelle (21) als Hohlwelle ausgeführt ist, in der zentrisch eine Eingangswelle (22) der Hydropumpe (14) mittels einer Kerbzahnverbindung befestigt ist.

## Claims

1. A device for coupling a driving wheel driven by the crankshaft of a reciprocating-piston engine to a drive shaft of an auxiliary unit, **characterized in that** the driving wheel (13) of the drive shaft (21) is rotatably mounted and can be connected rotationally rigidly thereto by means of a synchronizing clutch (15), wherein the synchronizing clutch (15) comprises a guide sleeve (23) rotationally rigid with respect to the drive shaft (21), a gear-shift sleeve (25) rotationally rigid therewith and axially displaceable, and two synchronizing rings (26, 27), of which one ring (27) is connected to the driving wheel and the other ring (26) is connected to the gear-shift sleeve (25), and wherein the synchronizing rings (26, 27) can be connected to each other at first by friction locking and then by positive locking by sliding the gear-shift sleeve (25) longitudinally.

2. A device according to Claim 1, **characterized in that** the synchronizing clutch (15) is in the form of one half of a commercially available synchronizing clutch, as used for shifting the gears in synchronized transmissions.

3. A device according to Claim 1, **characterized in that** the reciprocating-piston engine (2) is set to idling when the synchronizing clutch (15) is engaged.

4. A device according to Claim 1, wherein the auxiliary unit is an hydraulic pump (14) with an adjustable conveying capacity, **characterized in that** the conveying capacity of the hydraulic pump (14) is reduced before the synchronizing clutch (15) is engaged.

5. A device according to Claim 4, **characterized in that** as a result of a valve (19) being opened, the hydraulic pump (14) conveys liquid without pressure into a storage tank (18), from which it also draws out the liquid.

6. A device according to Claims 1 and 4, **characterized in that** the drive shaft (21) is constructed in the form of a hollow shaft, in which an input shaft (22) of the hydraulic pump (14) is secured centrally by means of a serration.

## Revendications

1. Dispositif d'accouplement d'une roue d'entraînement, entraînée par le vilebrequin d'un moteur à piston alternatif, avec un arbre moteur d'un groupe auxiliaire, caractérisé en ce que la roue d'entraînement (13) de l'arbre moteur (21) est montée tournante et peut être reliée solidaire en rotation avec celui-ci, au moyen d'un accouplement de synchronisation (15), l'accouplement de synchronisation (15) étant constitué d'un manchon de guidage (23) fixe en rotation par rapport à l'arbre moteur (21), d'un manchon de manoeuvre (25) fixe en rotation par rapport au précédent et coulissant axialement ainsi que de deux anneaux de synchronisation (26, 27), dont un anneau (27) est fixé sur la roue d'entraînement l'autre anneau (26) sur le manchon de manoeuvre (25) et les anneaux de synchronisation (26, 27) pouvant être reliés entre eux d'abord par friction puis par concordance de forme, par déplacement longitudinal du manchon de manoeuvre (25).

2. Dispositif selon la revendication 1, caractérisé en ce qu'on a recours comme accouplement de synchronisation (15) à la moitié d'un accouplement de synchronisation du commerce, tel qu'il est utilisé pour commander les rapports des boîtes de vitesses synchronisées.

3. Dispositif selon la revendication 1, caractérisé en ce que le moteur à piston alternatif (2) passe en marche à vide lors de l'embrayage de l'accouplement de synchronisation (15).

4. Dispositif selon la revendication 1, dans lequel le groupe auxiliaire est une pompe hydraulique (14) à débit réglable, caractérisé en ce que le débit de la pompe hydraulique (14) est réduit avant embrayage de l'accouplement de synchronisation (15).

5. Dispositif selon la revendication 4, caractérisé en ce que la pompe hydraulique (14) refoule le fluide sans pression, par ouverture d'une vanne (19), dans un réservoir (18) à partir duquel elle aspire aussi.

6. Dispositif selon les revendications 1 et 4, caractérisé en ce que l'arbre moteur (21) est un arbre ceux au centre duquel un arbre d'entrée (22) de la pompe hydraulique (14) est fixé au moyen d'un assemblage à cannelures.
